# EUROPEAN PATENT SPECIFICATION

(11) **EP 3 731 720 B1**
(45) Date of publication and mention of the grant of the patent: **02.08.2023**
(21) Application number: 18896180.9
(22) Date of filing: 11.10.2018
(51) Int. Cl.: A47L 15/42, A47L 15/48

(54) **A HEAT PUMP DISHWASHER**
WÄRMEPUMPENGESCHIRRSPÜLER
LAVE-VAISSELLE ÉQUIPÉ D'UNE POMPE À CHALEUR

(30) Priority: 25.12.2017 TR 201721398
(43) Date of publication of application: 04.11.2020
(73) Proprietor: Arçelik Anonim Sirketi, 34445 Istanbul (TR)
(72) Inventor: POYRAZ, Onur, 34445 Beyoglu/Istanbul (TR); SAGLICAN, Emre, 34445 Beyoglu/Istanbul (TR); AYNUR, Tolga Nurettin, 34445 Beyoglu/Istanbul (TR); ALPTEKIN, Ahmet, 34445 Beyoglu/Istanbul (TR); AYATA AKKAS, Nevin, 34445 Beyoglu/Istanbul (TR)
(86) International application number: PCT/TR2018/050587
(87) International publication number: WO 2019/132817

(56) References cited:
- EP-A1- 2 047 786
- EP-A2- 2 777 471
- EP-A2- 2 777 474
- WO-A1-2016/091329
- CN-A- 106 073 681
- CN-A- 106 580 218
- CN-U- 204 192 550
- US-A1- 2007 095 369

## Description

The present invention relates to a dishwasher wherein the efficiency of the heat pump system is increased.

The heat pump system in the heat pump dishwashers is composed of a compressor that pressurizes the refrigerant and provides the circulation thereof, flow tubes wherein the refrigerant circulates, a condenser, an evaporator, and an expansion element. The condenser is a heat exchanger that releases heat to the environment, the surface of which heats up during the circulation of the refrigerant, and enables the water to be heated by being positioned in the washing water of the dishwasher. The evaporator is a heat exchanger that absorbs heat from the environment, the surface of which cools down during the circulation of the refrigerant, and is positioned so as to be in contact with the ambient air (kitchen environment). The heat absorbed from the environment by the evaporator is transferred to the condenser by means of the refrigerant. The evaporator increases the amount of heat in the heat pump system by absorbing heat from the environment and enables the surface temperature of the condenser to be increased and thus, the washing water to be heated. The evaporator absorbs heat from the environment by means of at least one fan. The fans sucks the ambient air and blows the same onto the evaporator. The air that is passed over the evaporator is sent back to the kitchen environment by being blown from the rear side of the casing that constitutes the lower section of the dishwasher body and that supports the heat pump system. The ambient air reaches the evaporator by passing through the gaps available at the side and bottom sections of the casing. Since the number of gaps at the side and bottom sections of the casing is small, the fans cannot send the ambient air to the evaporator at the desired flow rate and speed. In this system, the air flow required to pass over the evaporator is limited and the desired heat transfer cannot be realized. The heat absorption capacity of the evaporator from the environment remains low, the compressor consumes more power to heat the water, causing decrease in efficiency and increase in energy consumption.

The European Patent No. EP3082554 (B1) relates to a heat pump dishwasher. In the heat pump dishwasher, in the water heating step the ambient air passes over through the evaporator while in the drying step the humid air in the washing environment passes over the evaporator. The evaporator performs dehumidification in the drying process.

The patent application No. EP2682038 (A2) relates to a heat pump dishwasher and the operation method thereof.

The patent application No. CN105476584 (A) relates to a heat pump dishwasher and the control method thereof.

The patent application No. EP2777471 (A2) relates to a household dishwasher, which comprises a heat pump device heating rinsing water and a condensation dryer supplying a rinsing container wall with external air, wherein the condensation dryer and the heat pump device comprise a common fan.

The aim of the present invention is the realization of a dishwasher wherein the efficiency of the heat pump is increased and the energy consumption is decreased.

The dishwasher realized in order to attain the aim of the present invention comprises a heat pump system that is composed of a compressor, a condenser, an evaporator, refrigerant flow tubes and an expansion element that together perform the refrigerant cycle. The condenser acts as a heater, and the washing water is heated by the condenser placed into a sump.

The dishwasher of the present invention comprises an air duct that enables the ambient air to be directed into the body and that has an inlet port provided at the front surface of the body and opening to the outer environment, and an outlet port opening into the body. The air flow in the air duct is realized by means of the vacuum created by the evaporator fans or an air supply fan that operates in the air duct, increasing the flow rate of the air that passes through the evaporator, and hence the heat transfer capacity of the evaporator and the efficiency of the heat pump system.

The heat pump dishwasher realized in order to attain the aim of the present invention is illustrated in the attached figures, where:
Figure 1 - is the schematic view of the heat pump dishwasher of the present invention.
Figure 2 - is the schematic view of the heat pump dishwasher in another embodiment of the present invention.
Figure 3 - the perspective view of the heat pump system, the air duct and the drying duct that are disposed on the casing.

The elements illustrated in the figures are numbered as follows:
1. Dishwasher
2. Body
3. Tub
4. Rack
5. Spray arm
6. Circulation pump
7. Drying duct
8. Drying fan
9. Heat pump system
10. Casing
11. Compressor
12. Condenser
13. Evaporator
14. Evaporator fan
15. Expansion element
16. Inlet port
17. Outlet port
18. Air duct
19. Air supply fan
20. Shutter
21. Auxiliary heat exchanger
22. Arm

The dishwasher (1) comprises a body (2); a tub (3) wherein the processes of washing, rinsing and drying are performed; at least one rack (4) wherein the items to be washed are placed; a circulation pump (6) that provide the delivery of the washing water onto the items to be washed by means of at least one spray arm (5); a drying duct (7) that takes the humid air in the tub (3) out of the tub (3) after the washing process so as to provide the circulation thereof and the drying of the items washed; a drying fan (8) that provides the flow of the air in the drying duct (7); a heat pump system (9) that is disposed at the lower part of the tub (3) and that provides the heating of the washing water, and a casing (10) that constitutes the lower section of the body (3) and encloses the region wherein the heat pump system (9) is integrated.

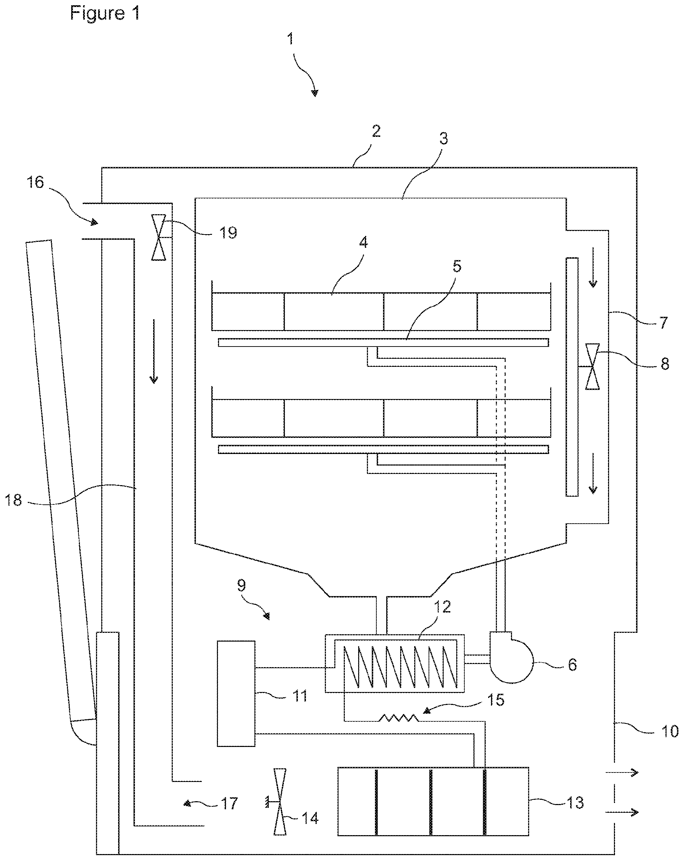

The heat pump system (9) comprises a compressor (11) that performs the refrigerant cycle; a condenser (12) that emanates heat by condensing the refrigerant (refrigerant fluid) pressurized by the compressor (11) and that is used for heating the washing water by being disposed in a sump wherein the washing water is collected; an evaporator (13) that evaporates the refrigerant so as to draw heat from the outer environment and to transfer the same to the condenser (12) by means of the compressor (11); at least one evaporator fan (14) that provides the heat transfer by blowing the ambient air onto the evaporator (13), and an expansion element (15), for example a capillary tube or an expansion valve, that provides the expansion of the refrigerant flowing from the condenser (12) to the evaporator (13) (Figure 1).

The heat pump system (9) is disposed outside the drying duct (7), and the condenser (12) enables the washing water that is taken into the sump to be heated. The heat transfer required for enabling the refrigerant passing through the evaporator (13) to change to the vapor phase is provided by means of the evaporator fans (14).

The dishwasher (1) of the present invention comprises an air duct (18) having at least one inlet port (16) arranged at the front surface of the body (2) and opening to the outer environment, for example to the kitchen environment, and an outlet port (17) opening into the region enclosed by the casing (10) at the lower section of the body (2), wherein the air duct (18) enables the outer environment air received through the inlet port (16) to be transferred into the body (2) and into the region surrounded by the casing (10) through the outlet port (17).

According to the present invention, the air sucked into the air duct (18) through the inlet port (16) is transferred to the outlet port (17) by means of the vacuum created by the evaporator fans (14) in the region enclosed by the casing (10) in the body (2).

In another embodiment of the present invention, the dishwasher (1) comprises an air supply fan (19) that is arranged in the air duct (18), that forces the flow of the air sucked through the inlet port (16) to be delivered to the outlet port (17), thus, increasing the flow rate of the air sent into the region surrounded by the casing (10) in the body (2). The air supply fan (19) is operated to support the evaporator fans (14) or independent of the evaporator fans (14), and the flow rate of the air passed over the evaporator (13) is increased (Figure 1).

In the dishwasher (1), the evaporator fans (14) are activated when the heat pump system (9) is operated. By means of the suction (vacuum) effect created by the evaporator fans (14), an air flow is created from the inlet port (16) of the air duct (18) towards the outlet port (17) thereof. When the flow rate of the air flow created by the evaporator fans (14) during the drying process is not sufficient, the air supply fan (19) is activated by the control unit (not shown in figures), and thus, the flow of fresh air required by the evaporator (13) is provided continuously at a high rate into the casing (10) region that is a closed and dense volume with very little free space. The efficiency of the heat pump system (9) is increased by increasing the amount of heat transferred by the evaporator (13).

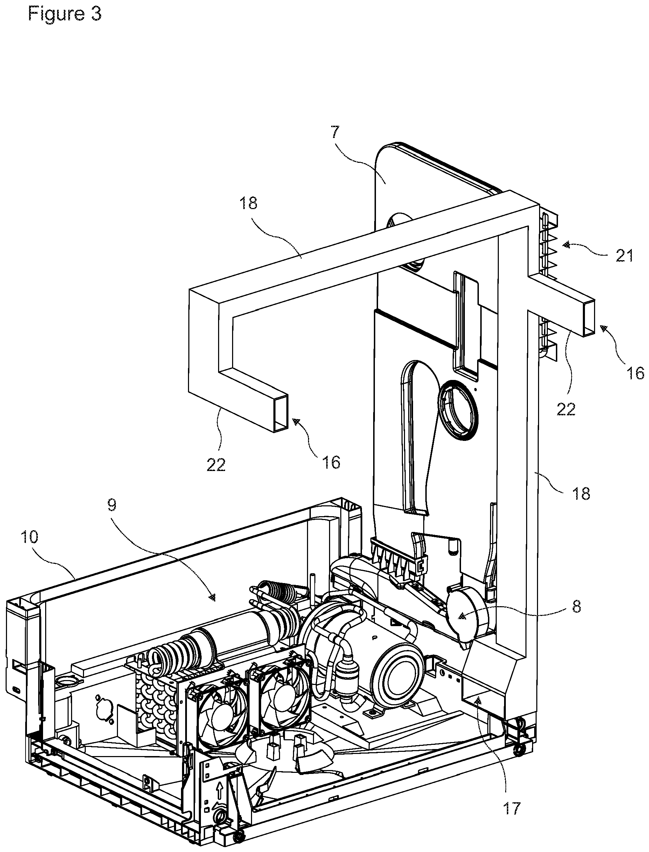

In another embodiment of the present invention, the air duct (18) comprises two inlet ports (16) provided at the upper part of the front side of the body (2) on both sides of the door, and two arms (22) that are connected to the inlet ports (16) (Figure 3).

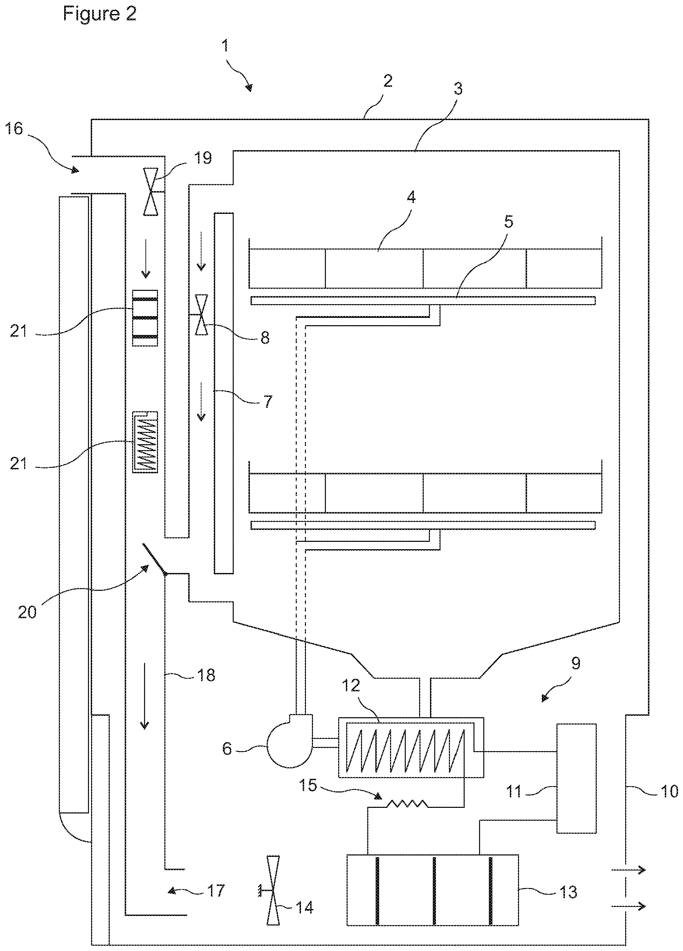

In another embodiment of the present invention, in the dishwasher (1), the air duct (18) and the drying duct (7) are fluidly connected to each other. In this embodiment, the dishwasher (1) comprises a shutter (20) that is disposed in the region wherein the drying duct (7) and the air duct (18) are connected to each other and that enables the air moving in the air duct (18) to be at least partially directed to the drying duct (7). The shutter (20) the position of which is changed by the control unit based on the status of the drying process controls the flow in the drying duct (7) and the air duct (18) and enables the air received through the inlet port (16) and moving in the air duct (18) to be directed to the drying duct (7) or the outlet port (17) or to be partially directed to the drying duct (7) and partially to the outlet port (17) (Figure 2).

In another embodiment of the present invention, the dishwasher (1) comprises at least one auxiliary heat exchanger (21) that is arranged in the air duct (18), that is connected to the heat pump system (9) or that is independent of the heat pump system (9) and that changes the temperature and the humidity of the air received through the inlet port (16) so as to provide the delivery of hot and dry air to the drying duct (7) and/or the outlet port (17) (Figure 2). The air sucked through the inlet port (16) is dehumidified and heated while passing through the auxiliary heat exchanger (21) in the air duct (18). The hot and dry air can be transferred to the drying duct (7) by being directed by the shutter (20). The air duct (18) and the auxiliary heat exchangers (21) provide the supply of hot and dry air that improves the performance of the drying duct (7), and thus, the drying process is expedited. In the embodiment of the present invention which is different from the state of the art embodiments wherein the supply of the hot and dry air is provided from the interior of the dishwasher, the drying process is supported with fresh air and the kitchenware washed and dried does not have the "detergent smell" since said hot and dry air is supplied from the outer environment (kitchen environment).

In the dishwasher (1) of the present invention, the evaporator fans (14) increase the amount of air passed through the evaporator (13). The heat transfer capacity of the evaporator (13) increases as the flow rate of the ambient air that is passed through the evaporator (13) increases and thus, the efficiency of the heat pump system (9) is improved. The energy consumption is decreased by operating the compressor (11) less. By providing hot and dry air supply from the air duct (18) to the drying duct (7), the drying performance is improved.

## Claims

1. - A dishwasher (1) **comprising** a body (2); a tub (3) wherein the processes of washing, rinsing and drying are performed; a drying duct (7) that provides the drying of the items washed; a drying fan (8) that provides the flow of the air in the drying duct (7); a heat pump system (9) that is disposed at the lower part of the tub (3) and that provides the heating of the washing water; a casing (10) that constitutes the lower section of the body (2) and encloses the region wherein the heat pump system (9) is integrated; a compressor (11), a condenser (12), an evaporator (13), at least one evaporator fan (14) and an expansion element (15) that constitute the heat pump system (9); an air duct (18) having at least one inlet port (16) arranged at the front surface of the body (2) and opening to the outer environment and an outlet port (17) opening into the region enclosed by the casing (10) at the lower section of the body (2), wherein the air duct (18) enables the outer environment air received through the inlet port (16) to be transferred into the body (2) and into the region surrounded by the casing (10) through the outlet port (17) by means of the vacuum created in the body (2) by the at least one evaporator fan (14), **characterized by** the at least one inlet port (16) being arranged at the upper part of the front side of the body (2).

2. - A dishwasher (1) as in Claim 1, **characterized by** an air supply fan (19) that is arranged in the air duct (18) and that forces the flow of the air sucked through the inlet port (16) to be delivered to the outlet port (17).

3. - A dishwasher (1) as in Claim 1 or 2, **characterized by** the air duct (18) comprising two inlet ports (16) provided at the upper part of the front side of the body (2) on both sides of the door, and two arms (22) that are connected to the inlet ports (16).

4. - A dishwasher (1) as in any one of the preceding claims, **characterized by** the air duct (18) that is fluidly connected to the drying fan (7), and a shutter (20) that is disposed in the region wherein the drying duct (7) and the air duct (18) are connected to each other and that enables the air moving in the air duct (18) to be at least partially directed to the drying duct (7).

5. - A dishwasher (1) as in any one of the preceding claims, **characterized by** at least one auxiliary heat exchanger (21) that is arranged in the air duct (18), that is connected to the heat pump system (9) or that is independent of the heat pump system (9) and that changes the temperature and the humidity of the air received through the inlet port (16) so as to provide the delivery of hot and dry air to the drying duct (7) and/or the outlet port (17).

## Patentansprüche

1. - Ein Geschirrspüler (1), **umfassend** einen Körper (2); eine Wanne (3), in der die Vorgänge Waschen, Spülen und Trocknen durchgeführt werden; einen Trocknungskanal (7), der für das Trocknen der gewaschenen Gegenstände sorgt; ein Trocknungsgebläse (8), das für den Luftstrom im Trocknungskanal (7) sorgt; ein Wärmepumpensystem (9), das im unteren Teil der Wanne (3) angeordnet ist und für die Erwärmung des Waschwassers sorgt; ein Gehäuse (10), das den unteren Abschnitt des Körpers (2) bildet und den Bereich umschließt, in dem das Wärmepumpensystem (9) integriert ist; einen Kompressor (11), einen Kondensator (12), einen Verdampfer (13), mindestens einen Verdampferventilator (14) und ein Expansionselement (15), die das Wärmepumpensystem (9) bilden; einen Luftkanal (18) mit mindestens einer Einlassöffnung (16), die an der Vorderfläche des Körpers (2) angeordnet ist und zur Außenumgebung hin offen ist und eine Auslassöffnung (17), die in den vom Gehäuse (10) umschlossenen Bereich am unteren Abschnitt des Körpers (2) mündet, wobei der Luftkanal (18) die durch den Einlassöffnung (16) aufgenommene Außenumgebungsluft zulässt, den durch den im Körper (2) durch den mindestens einen Verdampferventilator (14) erzeugten Unterdruck durch die Auslassöffnung (17) in den Körper (2) und in den vom Gehäuse (10) umgebenen Bereich überführt werden; gekennzeichnet ist es dadurch, dass mindestens eine Einlassöffnung (16) im oberen Teil der Vorderseite des Körpers (2) angeordnet ist.

2. - Ein Geschirrspüler (1), wie in Anspruch 1 aufgeführt, **ist dadurch gekennzeichnet, dass** ein Luftzufuhrventilator (19) im Luftkanal (18) angeordnet ist und den Strom der durch die Einlassöffnung (16) angesaugten Luft zur Auslassöffnung (17) fördert.

3. - Ein Geschirrspüler (1), wie in Anspruch 1 oder 2 aufgeführt, **ist dadurch gekennzeichnet, dass** der Luftkanal (18) zwei Einlassöffnungen (16) umfasst, die im oberen Teil der Vorderseite des Körpers (2) auf beiden Seiten der Tür vorgesehen sind, und zwei Arme (22), die mit den Einlassöffnungen (16) verbunden sind.

4. - Ein Geschirrspüler (1), wie in einem der vorherigen Ansprüchen aufgeführt, **ist dadurch gekennzeichnet, dass** der Luftkanal (18) strömungstechnisch mit dem Trocknungskanal (7) verbunden ist und eine Klappe (20) aufweist, die in dem Bereich angeordnet ist, in dem der Trocknungskanal (7) und der Luftkanal (18) miteinander verbunden sind und das ermöglicht, dass die im Luftkanal (18) bewegte Luft zumindest teilweise zum Trocknungskanal (7) geleitet wird.

5. - Ein Geschirrspüler (1), wie in einem der vorherigen Ansprüchen aufgeführt, **ist dadurch gekennzeichnet, dass** mindestens ein Zusatzwärmetauscher (21) im Luftkanal (18) angeordnet ist, das mit dem Wärmepumpensystem (9) verbunden oder unabhängig vom Wärmepumpensystem (9) ist und die Temperatur und Feuchtigkeit der durch die Einlassöffnung (16) empfangenen Luft ändert, um die Zufuhr heißer und trockener Luft zum Trocknungskanal (7) und/oder zur Auslassöffnung (17) zu gewährleisten.

## Revendications

1. - Un lave-vaisselle (1) **comprenant** un corps (2) ; une baignoire (3) dans laquelle les processus de lavage, de rinçage et de séchage sont effectués ; un conduit de séchage (7) qui assure le séchage des articles lavés ; un ventilateur de séchage (8) qui assure le flux d'air dans le conduit de séchage (7) ; un système de pompe à chaleur (9) qui est disposé dans la partie inférieure de la baignoire (3) et qui assure le chauffage de l'eau de lavage ; une enveloppe (10) qui constitue la partie inférieure du corps (2) et renferme la zone dans laquelle le système de pompe à chaleur (9) est intégré ; un compresseur (11), un condenseur (12), un évaporateur (13), au moins un ventilateur d'évaporateur (14) et un élément d'expansion (15) qui constituent le système de pompe à chaleur (9) ; un conduit d'air (18) ayant au moins un orifice d'entrée (16) disposé sur la surface avant du corps (2) et s'ouvrant sur l'environnement extérieur et un orifice de sortie (17) s'ouvrant dans la région enfermée par l'enveloppe (10) à la section inférieure du corps (2), dans lequel le conduit d'air (18) permet à l'air de l'environnement extérieur reçu par l'orifice d'entrée (16) d'être transféré dans le corps (2) et dans la région entourée par le boîtier (10) par l'orifice de sortie (17) au moyen de la dépression créée dans le corps (2) par au moins un ventilateur d'évaporateur (14), **caractérisé par le fait qu'**au moins un orifice d'entrée (16) est disposé sur la partie supérieure de la face avant du corps (2).

2. - Un lave-vaisselle (1) selon la déclaration 1, **caractérisé par** un ventilateur d'alimentation en air (19) qui est disposé dans le conduit d'air (18) et qui force le flux de l'air aspiré par l'orifice d'entrée (16) à être délivré à l'orifice de sortie (17).

3. - Un lave-vaisselle (1) selon la déclaration 1 ou 2, **caractérisé par le fait que** le conduit d'air (18) comprend deux orifices d'entrée (16) prévus à la partie supérieure de la face avant de la caisse (2) de part et d'autre de la porte, et deux bras (22) qui sont reliés aux orifices d'entrée (16).

4. - Un lave-vaisselle (1) selon l'une quelconque des déclarations précédentes, **caractérisé par** le conduit d'air (18) qui est relié fluidiquement au ventilateur de séchage (7), et un obturateur (20) qui est disposé dans la région où le conduit de séchage (7) et le conduit d'air (18) sont reliés l'un à l'autre et qui permet de diriger au moins partiellement l'air en mouvement dans le conduit d'air (18) vers le conduit de séchage (7).

5. - Un lave-vaisselle (1) selon l'une quelconque des déclarations précédentes, **caractérisé par** au moins un échangeur de chaleur auxiliaire (21) qui est disposé dans le conduit d'air (18), qui est connecté au système de pompe à chaleur (9) ou qui est indépendant du système de pompe à chaleur (9) et qui modifie la température et l'humidité de l'air reçu par l'orifice d'entrée (16) de manière à assurer la fourniture d'air chaud et sec au conduit de séchage (7) et/ou à l'orifice de sortie (17).
